# EUROPEAN PATENT SPECIFICATION

(11) **EP 1 720 131 B1**
(45) Date of publication and mention of the grant of the patent: **08.04.2009**
(21) Application number: 05009717.9
(22) Date of filing: 03.05.2005
(51) Int. Cl.: G06T 15/20

(54) **An augmented reality system with real marker object identification**
Augmented-Reality-System mit Identifizierung der realen Markierung des Objekts
Système de réalité augmentée avec identification du marqueur réel d'objet

(43) Date of publication of application: 08.11.2006
(73) Proprietor: Seac02 S.r.l., 10121 Torino (IT)
(72) Inventor: Carignano, Andrea, 10121 Torino (IT); Martini, Simona, 10121 Torino (IT)
(74) Representative: Grünecker, Kinkeldey, Stockmair & Schwanhäusser Anwaltssozietät

(56) References cited:
- US-A1- 2004 104 935
- BOULANGER ET AL.: "A real-time augmented reality system for industrial tele-training" PROCEEDINGS OF THE SPIE, vol. 5013, 21 January 2003 (2003-01-21), - 24 January 2003 (2003-01-24) pages 1-13, XP002347972 SPIE, US
- KATO H ET AL: "Marker tracking and HMD calibration for a video-based augmented reality conferencing system" AUGMENTED REALITY, 1999. (IWAR '99). PROCEEDINGS. 2ND IEEE AND ACM INTERNATIONAL WORKSHOP ON SAN FRANCISCO, CA, USA 20-21 OCT. 1999, LOS ALAMITOS, CA, USA,IEEE COMPUT. SOC, US, 20 October 1999 (1999-10-20), pages 85-94, XP010358756 ISBN: 0-7695-0359-4
- KUTULAKOS K N ET AL: "Affine object representations for calibration-free augmented reality" VIRTUAL REALITY ANNUAL INTERNATIONAL SYMPOSIUM, 1996., PROCEEDINGS OF THE IEEE 1996 SANTA CLARA, CA, USA 30 MARCH-3 APRIL 1996, LOS ALAMITOS, CA, USA,IEEE COMPUT. SOC, US, 30 March 1996 (1996-03-30), pages 25-36, XP010157043 ISBN: 0-8186-7295-1
- R. AZUMA: "A Survey of Augmented reality" PRESENCE, CAMBRIDGE, MA, USA, vol. 6, no. 4, August 1997 (1997-08), pages 1-48, XP002254668
- S. CHEN ET AL.: "View Interpolation for Image Synthesis" PROC. INT. CONF. ON COMPUTER GRAPHICS AND INTERACTIVE TECHNIQUES, 6 August 1993 (1993-08-06), pages 1-7, XP002913618

## Description

Generally, the present invention relates to an augmented reality system that is configured to survey a real world environment, generate image data thereof, render virtual image data and superimpose the virtual image data with additional object data so as to "augment" the real world environment.

The rapid advance in computer technology has also brought about significant improvements in various technical fields, such as image processing, software development, and the like. Consequently, even small sized computer devices provide the computational power and resources for manipulating image data in real time, thereby offering the potential for many technical developments usable in everyday applications. One important example is the so-called augmented reality technology, in which a real environment is surveyed so as to generate image data thereof, while the image data received from the real environment may be processed and manipulated and may thereby be supplemented by object image data from a "virtual" object so as to provide an image to the user including the virtual object. Moreover, the user's perception of the real environment may be augmented with any kind of information as may be needed for the application under consideration. Typically, an augmented reality system comprises an imaging system, such as a video camera, so as to generate image data of the real environment, which is then combined with any computer-generated graphics or other information that is then provided to the user so as to place the user in an augmented environment. For instance, if a user intends to design a living room or a kitchen in his house, the corresponding room, possibly including some furniture, may represent the real environment imaged by the video camera, whereas the augmented reality presented to the user on an appropriate display device may include additional furniture created by the computer on the basis of an appropriate database. For this purpose, typically specific positions in the imaged real environment may be marked by a corresponding cursor or the like, and one of the objects of the database selected by the user may be inserted into the image while observing the spatial relationships of the virtual object with respect to the "real" objects. Although these conventional augmented reality systems provide inexpensive alternatives in, for instance, designing rooms, houses and the like, they nevertheless lack flexibility in positioning the virtual objects within the real environment when, for instance, a high degree of variation of the viewer position with respect to the position of the virtual object is desired.

US 2004/0104935 discloses a head mounted display that contains a video camera and a video display. A plurality of target markers are distributed within a virtual environment room An automatic calibration program selects pair of targets from an image from the video camera. The selected pairs of targets are identified and the position of each target is calculated relative to the camera. The position of each target in a pair is then calculated in relation to each other. The positions of each target pair are added to the list of relative target transforms.

The technique described in US 2004/0104935 is based on the concepts of Image - Based Rendering (IBR) disclosed for example in E. Chen and L. Williams, View Interpolation for Image Synthesis. SIGGRAPH 1-6 Aug 1993, pp 279-288 and of R.T. Azuma, A surrey of Augmented Reality", Presence, 6/4); 355 - 385, August 1997.

Therefore, a need exists for an augmented reality system and a method that allows enhanced flexibility and improved "fidelity" in tracking and superimposing virtual objects with a specified real environment.

According to one aspect of the present invention, the object is solved by an augmented reality system comprising means for gathering image data of a real environment, means for generating virtual image data from the image data, means for identifying a predefined marker object of the real environment based on the image data, means for superimposing a set of object image data with the virtual image data at a virtual image position corresponding to the predefined marker object and a rendering system configured to scan a portion of the real environment to determine the illumination condition of said real environment and to adapt said object image data to said illumination condition, wherein said rendering system further generates virtual shadow on the basis of the position of said marker object, said set of object image data and said illumination condition.

Consequently, according to the Inventive augmented reality system the predefined marker object, which may be placed anywhere in the real environment, is identified in an automated fashion based on the image data corresponding to the real environment, thereby allowing a high degree of flexibility in, for instance, "viewing" the virtual object from any desired point of view. Contrary to conventional augmented reality systems, in which the position of a virtual object is typically selected on the basis of the image of the real environment, the present invention enables to "observe" the virtual object already in the real environment by correspondingly viewing it's place holder, ie. the marker object. Consequently, various viewing angles and viewpoints may be selected, thereby generating detailed information about the spatial relationship of the virtual object to real object In the environment, which may assist in a more real embedding of the virtual object into the neighbourhood of the real environment. For example, the marker object may frequently be re-positioned In the environment, wherein the image data generated from the reconfigured real environment may allow to more precisely take Into consideration the illumination conditions, particularly when the point of view Is also changed. For instance, a user walking through a room may continuously point to the marker object thereby generating the virtual image data which may then represent the room with a plurality of information about the real conditions for a plurality of different view points of the virtual object. Thus, embedding of the virtual object may be accomplished In a more realistic manner.

In order to obtain a high degree of "reality" even for the virtual object inserted Into the real environment, the present invention enables an appropriate adaptation of the appearance of the virtual object with respect to the illumination conditions prevailing in the real environment. Typically, the virtual object is created independently from the image data of the real environment, wherein the size and orientation of the virtual objects are then appropriately adapted to the actual point of view and the position of the marker object. By means of the rendering system, the local illumination situation at the position of the marker object and in its neighbourhood may be taken into consideration when generating the image data for the virtual object. Hence, global or local brightness and colour variations due to the specific illumination condition of the real environment, especially at the position of the marker object, may be created upon the generation of the object image data.

Being the rendering system configured to generate virtual shadow on the basis of the position of the marker object, the set of object image data and the illumination conditions of the real environment, a highly realistic embedding of the virtual object into the real environment may be achieved. For example, even though the marker object may not represent an object that actually significantly affects the "real" illumination system at the position of the marker object, and may merely represent a substantially two-dimensional symbol, the rendering system may nevertheless estimate the virtual illumination situation for the augmented reality so as to generate appropriate virtual shadow that may be caused by the virtual object and/or that may be caused by the real objects on the virtual objects, or at least portions thereof.

In a further preferred embodiment, means are provided for correlating a plurality of sets of object data with the predefined marker object. Hence, the same marker object in the real environment may be associated with a plurality of virtual objects so that, upon user selection, a specific one of the virtual objects may be selected so as to replace the marker object in the virtual reality. It should be appreciated that the plurality of sets of object image data may be generated upon request from appropriate data, which may be stored in advance or which may be generated upon request. For example, the data representing a virtual object may have been obtained by image data of a different real environment, which may be processed and manipulated so as to enable the creation of three-dimensional image data according to a specified spatial orientation of the virtual object as required during the embedding of the virtual object into the image data of the real environment. Similarly, data for creating the object image data may also be obtained from the real environment under consideration, for instance by isolating a portion of the image data and correspondingly processing the data in any appropriate fashion to thereby provide the object image data when required. In other embodiments, the object image data may represent data created entirely by software resources or at least partially by software tools, such as design software, and the like.

In a further preferred embodiment, means are provided for selecting one of the plurality of sets of object image data that are to be superimposed with the virtual image data. Thus, while in some applications the correlation between the sets of object image data and the marker object may be predefined by the system, for instance each of the sets of object image data may be used in generating the augmented reality in a timely predefined sequence, in this embodiment, the respective association of the object image data with the marker object may be selected by the user.

In one illustrative embodiment, the means for selecting a correlation comprises a speech recognition system, to enable a convenient selection of one of plural virtual objects to be embedded into the real environment.

In a further preferred embodiment, the system further comprises output means for displaying at least the virtual image data. Consequently, the virtual image data may be displayed to the user, preferably in real time, thereby allowing to substantially instantly provide an augmented real environment to the user, wherein different viewpoints and various virtual objects, depending on the number of sets of object image data, may be realised.

In other embodiments, the output means is furthermore configured to present in addition to the virtual image data other information, such as audio information, tactile information, olfactory information, and the like. For example, in simulating any panic situations, it may be appropriate to not only include any visible virtual objects into the real environment, but also audio and olfactory "objects", which of course may not be considered as virtual objects.

In a further preferred embodiment, the output means comprises a head-mounted display means. For instance, the head-mounted display means may be provided in the form of eyeglasses, having appropriate display surfaces instead of lenses, such as LCD display means, so as to provide a highly real three-dimensional impression of the augmented reality. The head-mounted display means may also comprise corresponding means for providing audio data and/or olfactory "data", for instance in the form of gaseous components, and the like.

In a further preferred embodiment, the head-mounted display means comprises means for gathering image data of the real environment. Thus, the user wearing the head-mounted display means may "see" the real environment on the basis of the virtual image data gathered by, for instance, appropriately positioned cameras and the like, while the marker object may be replaced by a specified set of object image data. Consequently, highly authentic three-dimensional image data may be obtained from the real environment, for instance by replacing corresponding image elements at positions that substantially correspond to the positions of the user's eyes so that the marker object, which is replaced by the virtual object, may be viewed without actually being visible to the user, thereby creating a high degree of "reality" of the environment including the virtual object.

In a further preferred embodiment, the means for identifying a predefined marker object comprises a tracking system that is configured to determine relative position data and orientation data of the marker object with respect to the means for gathering image data of the real environment. Hence, the tracking system enables the determination of the spatial relationship of the point of view, ie. of a camera and the like, to the marker object so that the orientation and the position of the marker object and thus of the virtual object may continuously be updated in accordance with a motion of the point of view. Moreover, based on the relative position data and the orientation data the virtual object may appropriately be rescaled so as to take into consideration the relative distance between the point of view and the marker object. Furthermore, the tracking system may comprise a scaling system so as to adapt the general size of the virtual object to the objects of the real environment. To this end, a distance measurement system may be provided in the tracking system which is configured to determine one or more absolute values of distances of objects in the real environment on the basis of the image data. For example, if furniture is to represent virtual objects to be incorporated into a real environment, corresponding absolute dimensions of these virtual objects are typically available when accessing the virtual object. Based on these absolute dimensions and any absolute distances obtained from the tracking system, the virtual object may appropriately be rescaled and therefore incorporated into the real environment without undue size "distortions".

Preferably, the tracking system is configured to provide and manipulate the relative position data and orientation data as well as any absolute distances substantially in real-time so as to allow a corresponding real-time manipulation of the object image data, thereby providing the augmented reality substantially in real-time. It should be understood that the term "real-time" refers to a processing time for data manipulation that allows a perception of the augmented reality substantially without any undue delay for a human viewer. For example, if moderately slow changes of the viewpoint of the real environment are performed, the corresponding augmented reality is provided substantially without a noticeable delay for human perception. As an example, using the above-identified head-mounted display means including one or more cameras for obtaining the image data of the real environment, the displayed augmented reality should substantially correspond to any movement of the user, such as a moderately slow turning of the head, walking through the environment, and the like.

Preferably, the system further comprises an object data generator for obtaining one or more sets of object image data. The object data generator may be based on image data of a "real" object to be used as virtual object and/or graphics tools for virtually generating at least portions of the virtual object and/or other information associated with the virtual object under consideration, such as sound data, olfactory data, and the like. For example, object-based software tools may be provided in the generator so as to provide the virtual object in real-time, wherein the outer appearance of the virtual object is adapted to the real environment image data by the tracking system in an appropriate manner, as is described above. In other examples, a real-time animation may be included so as to allow a variation of size and shape of the virtual object in accordance with a predefined process flow or in accordance with user selection. For instance, in simulating panic situations, such as fire in a building, the virtual object initially placed at a position described by the marker object may vary in size and shape and may even initiate the presence of further virtual objects at positions that may not be indicated by any marker objects so as to provide a substantially dynamic behaviour of the virtual object under consideration.

In other embodiments, the means for identifying a marker object may be configured so as to identify a plurality of marker objects, wherein each of the plurality of marker objects is correlated with one or more virtual objects. Consequently, a high degree of flexibility is provided as the real environment may readily be adapted by correspondingly replacing respective marker objects in the environment.

In a further advantageous embodiment, the system comprises a virtual illumination system configured to determine at least a position and/or an intensity and/or a colour distribution of at least one real light source in the real environment on the basis of the image data gathered. Thus the virtual illumination system enables to quantitatively analyze the illumination situation in the real environment by identifying at least one light source and quantitatively characterizing at least some of its characteristics. For instance, when the real environment represents a room including one or more light bulbs, windows, etc, presently "active" light sources may be identified and the corresponding information may be used in appropriately implementing the virtual object into the real environment while taking into consideration the effect of the identified light source on the virtual object.

In a further embodiment, the virtual illumination system is further configured to generate a virtual light source corresponding to the at least one identified real light source. Consequently, the light source may be "integrated" into the virtual reality, thereby enabling a high degree of adaptation of the virtual object to the illumination condition provided by the virtual light source. Advantageously, the virtual illumination system is configured to vary the position and/or the intensity and/or the colour of the virtual light source. Thus, the real environment may be "observed" under illumination conditions that differ from the presently prevailing illumination situation, thereby enabling an assessment of the virtual object under varying and quite different environmental conditions. For example, the effect of jewellery, clothes etc, may be assessed under different light conditions. Preferably, the virtual illumination system is further configured to generate one or more additional virtual light sources so as to provide an enhanced flexibility in creating "virtual" illumination conditions or in more precisely simulating the presently prevailing illumination condition in the real environment. For example, the illumination condition of the real environment may not readily be simulated by one or few light sources, such as when a diffused illumination is considered, whereas the embedding of relatively large three-dimensional virtual objects may nevertheless considerably change the total illumination conditions. In other embodiments, the virtual object itself may be the source of light so that it may be considered to introduce one or more additional light sources into the real environment.

According to a further aspect of the present invention, a virtual mirror system is provided that comprises an augmented reality system as is specified in the embodiments above or in the embodiments that will be described with reference to the accompanying figures. Moreover, the virtual mirror system comprises display means having a display surface positioned in front of a part of interest of the real environment, wherein the means for gathering image data of the real environment comprises and optical imaging system that is positioned in front of the part of interest.

Thus, the positioning of a display surface in combination with the positioning of the optical imaging system allows to obtain a mirror function of the system wherein, for instance, the user may represent the part of interest of the real environment, thereby allowing the user to obtain a view of himself/herself with the marker object being replaced by the corresponding virtual object. For instance, the marker object may represent virtual objects, such as jewellery, clothes, cosmetic articles, different hairstyles, and the like.

Preferably, the virtual mirror system is configured to identify a plurality of predefined marker objects provided in the part of interest. Hence, a plurality of virtual objects in various combinations may be assessed by the user. For instance, ear stickers may be viewed along with a necklace, or different parts of clothes may virtually be combined. Moreover, the effect of cosmetic or surgical operations may be assessed by the user in advance.

According to a further aspect of the present invention a method of generating an augmented reality is provided, wherein the method comprises gathering image data from a real environment and identifying a predefined marker object provided in the real environment on the basis of the image data. Moreover, virtual image data of the real environment are generated and at least virtual image data corresponding to the predefined marker object are replace by object image data associated with the predefined marker object.

Finally, at least a portion of said environment is scanned to generate scan data, the illumination condition is determined on the basis of said scan data and virtual shadow is generated on the basis of the position of said marked object, said set of object image data and said illumination condition.

Hence the inventive method may be used in combination with the above-described augmented reality system, thereby providing substantially the same advantages.

Preferably, the method further comprises tracking the predefined marker object when modified image data are gathered from the real environment That is, the predefined marker object is "observed' even if changing image data are obtained from the real environment, thereby enabling an appropriate reconfiguration of the virtual object that replaces the marker object in the virtual image data.

In one illustrative embodiment, tracking the predefined marker object at least comprises determining a relative position and orientation of the predefined marker object with respect to a virtual reference point. Thus, by appropriately selecting a virtual reference point, such as the position of an optical imaging system such as a camera, and the like, which may move around in the real environment, the virtual object may be incorporated into the virtual image of the real environment with appropriate position, dimension and orientation. In other cases, the marker object may move around the environment, for instance to visualize the effect of moving objects within a specified environment, wherein the relative positional data and orientation with respect to the virtual reference point provides the possibility to appropriately scale, position and orient the virtual object in its virtual environment.

In other preferred embodiments, the object image data may be generated on the basis of image data from a second real environment that is different from the real environment, and/or on the basis of image data from the real environment and/of the basis of a virtual reality. As is already previously explained, a high degree of flexibility in generating virtual objects is presented in that data arising from a real object, ie**.** image data of a real object, may be used in combination with appropriate image processing tools so as to obtain corresponding three-dimensional data on which the tracking system may operate so as to provide for the required scaling, positioning and orienting activities required for a correct integration of the virtual object into the real environment image data. Moreover, the present invention also allows any combination of virtually-generated object data, for instance produced by appropriate software tools, such as design software or any other appropriate graphics tools, or wherein purely virtually-generated object data may be combined with data obtained by imaging real objects. Hereby, the generation of the object data may be performed at any appropriate time, depending on the computational resources of the corresponding augmented reality system. For example, one or more sets of object data may be stored in advance in a database, which may then be retrieved upon request. In other cases, one or more virtual objects may be created by software applications operated simultaneously with the augmented reality system, wherein the user may interactively communicate with the software application so as to influence the generation of the optic data, while in other cases the software application itself may determine, at least partially, specifics of the virtual object. For example, when simulating certain panic situations the software application may provide for virtual object data based on random and/or user interaction, and/or on the basis of a predefined process flow.

Scanning of the real environment, for instance by changing the observation angle within a range of 270° or even 360°, enables to establish an illumination map, which may be used to appropriately adapt the outer appearance of the virtual object under the given illumination condition. Preferably, scanning of the portion of the real environment is performed for at least two different illumination conditions. Consequently, a corresponding illumination map for the at least two different illumination conditions may be used to more precisely estimate the correct brightness and colouration of the virtual object. Moreover, based on the scan data, the augmented reality may be displayed to the user on the basis of different illumination conditions, which therefore provide a high degree of "reality" as these different virtual illumination conditions are based on measurement data. For example, the various scan operations may be performed with a different exposure intensity and/or with different colours, thereby providing the potential for calculating the various differences in brightness and colour of the virtual object on the basis of corresponding changes of the real object of the environment, such as the marker object, and any objects in the vicinity of the marker object.

Preferably, determining an illumination condition comprises identifying at least one light source illuminating the real environment and determining a position and/or an intensity and/or a colour of the at least one light source. For example, based on the scan data, the intensity and colour distribution and in particular "virtual" or real origins of light emission and the corresponding angles of incidence onto the real environment may be identified. For example, one or more light bulbs provided on a ceiling or corresponding room walls may readily be identified on the basis of the scan data and hence angles of incidence on the virtual object may be calculated by generating corresponding virtual light sources. Thus, corresponding virtual shadows and other brightness variations may be calculated on the basis of the virtual light sources. Moreover, the virtual light sources corresponding to the real illumination conditions may be varied, for instance upon user request, so as to provide the real environment including the virtual object with a changed illumination condition which may not represent the presently prevailing illumination condition in the real environment. Moreover, additional virtual light sources may be created, thereby enabling even the establishment of light conditions that may not be obtained by the real environment. For instance, the virtual objects themselves may represent light sources, such as illumination systems for rooms, houses, open air areas, such as gardens, parks, and the like, thereby allowing the investigation of the effect of different lighting systems on the real environment. Based on the scan data obtained from the real environment for one or more actual illumination conditions, the effect of the additional virtual light sources may be calculated highly efficiently so as to endow the virtual light source with a high degree of "reality".

In a preferred embodiment, the virtual image data are displayed to the user with at least the marker object image data replaced by the object image data. Thus, the virtual image data including the virtual object may be displayed in any way as is appropriate for the specified application, thereby allowing for high flexibility in using the inventive augmented reality technique. For instance, when gathering image data of the real environment, for instance by camera operated by the user, the corresponding virtual reality including the virtual object may not necessarily be displayed appropriately on the camera due to a lack of appropriate display devices, whereas the virtual image data may be displayed, possibly after a corresponding image data manipulation and processing, on a suitable display. In some applications, the computational resources provided at the scene may not allow to provide a real-time operation of the system in the sense that the gathering of the image data of the real environment and the incorporation of the virtual object data is performed substantially simultaneously through, for instance, a highly complex data manipulation. In this case, the image data of the real environment may be appropriately segmented on the basis of appropriately selected time slots and the corresponding data manipulation for incorporating the virtual object may be performed on the basis of the segmented image data, which are then joined together and appropriately displayed, thereby imparting a certain delay with respect to the gathering of the image data. In the meantime, any further incoming image data of the real environment may be stored in a corresponding buffer. In this sense, the image data processing is in "real-time", as any modification of the incoming image data is "simultaneously" seen in the virtual image data, however with an absolute time delay with respect to the actual event.

In a further preferred embodiment, the method comprises associating one or more sets of object data with one or more marker objects. Hence, suitable relationships between marker objects and corresponding virtual objects may be established, in advance, in real-time, or in any other desired configuration, thereby allowing a high degree of flexibility in using the augmented reality system. Thus, advantageously, after associating the one or more sets of object data with the one or more marker objects, a specific set of object data may be selected so as to replace a specific marker object that is associated with a plurality of sets of object data. Consequently, the virtual object may rapidly be exchanged upon selecting a different set of object data associated with the same marker object. The process of selecting a desired virtual object may be based on speech recognition, manual interaction of a user, software applications, and the like.

According to a further aspect of the present invention, a method of forming a virtual mirror image comprises positioning a display means and an image capturing means in front of a part of interest of a real environment and gathering image data from the part of interest by operating the image capturing means. Moreover, a predefined marker object provided in the part of interest is identified on the basis of the image data and virtual image data are generated corresponding to the part of interest. Finally, at least virtual image data corresponding to the predefined marker object are replaced by object image data associated with a predefined marker object. Thus virtual images, for instance of a user, may be obtained, wherein the appearance of the user may be modified in accordance with any marker object attached to the user.

Further preferred embodiments of the present invention are defined in the appended claims and will also be described in the following with reference to the accompanying drawings, in which:
Fig. 1a schematically shows an augmented reality system in accordance with the present invention;
Fig. 1b schematically shows additional components, such as a tracking system, a distance measurement system and a rendering system of the embodiment of Fig. 1a;
Fig. 1c schematically shows the operating principle of the rendering system shown in Fig. 1 b;
Fig. 1d depicts a flow chart for illustrating the operation of the rendering system;
Fig. 2 schematically depicts an embodiment including a head-mounted display device in accordance with one illustrative embodiment; and
Fig. 3 schematically shows a virtual mirror system according to one illustrative embodiment of the present invention.

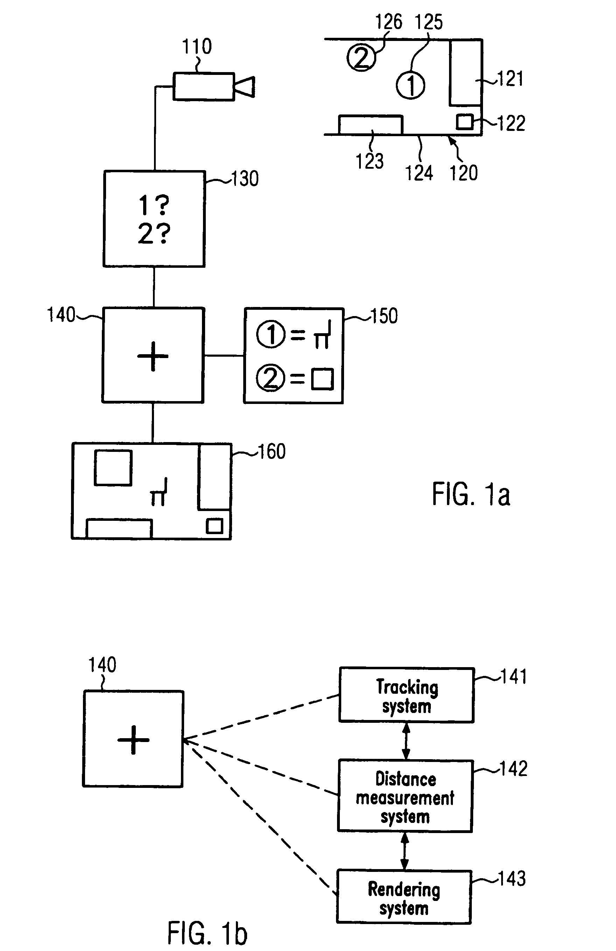

Fig. 1a schematically shows in a simplified illustration an augmented reality system 100 according to the present invention. The system 100 comprises means 110 for gathering image data from a real environment 120. The means 110 may represent a video camera, a plurality of video cameras or any other appropriate image capturing devices, and the like. Moreover, the means 110 may also represent in some embodiments a source of image data that may have previously been obtained from the environment 120. Hereafter, the means 110 for gathering image data will be referred to as the camera 110, wherein it is not intended to restrict the present invention to any particular optical imaging system. The real environment 120 may represent any appropriate area, such as a room of a house, a portion of a specific landscape, or any other scene of interest. In the representative embodiment shown in Fig. 1a, the real environment 120 represents, for instance, a living room comprising a plurality of real objects 121 ... 124, for instance in the form of walls 124, and furniture 121, 122 and 123. Moreover, the real environment 120 may comprise further real objects that will be considered as marker objects 125, 126 which may have any appropriate configuration so as to be readily identified by automated image processing algorithms. For instance, the marker objects 125, 126 may have formed thereon significant patterns that may easily be identified, wherein the shape of the marker objects 125, 126 may be designed so as to allow an identification thereof from a plurality of different viewing angles. It should be appreciated, however, that the marker objects 125, 126 may also represent substantially two-dimensional configurations having formed thereon respective identification patterns. The system 100 further comprises a means 130 for identifying the marker objects 125, 126 on the basis of image data provided by the camera 110. The identifying means 130 may comprise well-known pattern recognition algorithms for comparing image data with predefined templates representing the marker objects 125, 126. For example, the identifying means 130 may have implemented therein an algorithm for converting an image obtained by the camera 110 into a black and white image on the basis of predefined illumination threshold values. The algorithm may further be configured to divide the image into predefined segments, such as squares, and to search for pre-trained pattern templates in each of the segments, wherein the templates may represent significant portions of the marker objects 125, 126. However, any other pattern recognition techniques may be implemented in the identifying means 130.

In one illustrative embodiment, first the live video image is turned into a black and white image based on a lighting threshold value. This image is then searched for square regions. The software finds all the squares in the binary image, many of which are not the tracking
markers, such as the objects 125, 126. For each square, the pattern inside the square is matched against some pre-trained pattern templates. If there is a match, then the software has found one of the tracking markers, such as the objects 125, 126. The software may then use the known square size and pattern orientation to calculate the position of the real video camera relative to the physical marker such as the objects 125, 126. Then, a 3x4 matrix is filled with the video camera's real world coordinates relative to the identified marker. This matrix is then used to set the position of the virtual camera coordinates. Since the virtual and real camera coordinates are the same, the computer graphics that are drawn precisely superimpose the real marker object at the specified position. Thereafter, a rendering engine may be used for setting the virtual camera coordinates and drawing the virtual images.

The system 100 further comprises means 140 for combining the image data received from the camera 110 with object data obtained from an object data generator 150. The combining means 140 may comprise a tracking system, a distance measurement system and a rendering system, as is described in more detail with reference to Fig. 1b. Generally, the combining means 140 is configured to incorporate image data obtained from the generator 150 for a correspondingly identified marker object so as to create virtual image data representing a three-dimensional image of the environment 120 with additional virtual objects corresponding to the marker objects 125, 126. Hereby, the combining means 140 is configured to determine the respective positions of the marker objects 125, 126 within the real environment 120 and also to track a relative motion between the marker objects 125, 126 with respect to any static objects in the environment 120 and with respect to a point of view defined by the camera 110.

The system 100 may further comprise output means 160 configured to provide the virtual image data, including the virtual objects generated by the generator 150 wherein, in preferred embodiments, the output means 160 is also configured to provide, in addition to image data, other types of data, such as audio data, olfactory data, tactile data, and the like.

In operation, the camera 110 creates image data of the environment 120, wherein preferably the image data may correspond to a dynamic state of the environment 120 which may, for instance, be represented by merely moving the camera 110 with respect to the environment 120, or by providing moveable objects within the environment, for instance the marker objects 125, 126, or one or more of the objects 121 ... 123 may be moveable. For example, the point of view of the environment 120 may be changed by moving around the camera 110 within the environment 120, thereby allowing to observe especially the marker objects 125, 126 from different perspectives so as to enable the assessment of virtual objects created by the generator 150 from different points of view. The image data provided by the camera 110 which may continuously be updated, are received by the identifying means 130, which recognizes the marker objects 125, 126 and enables the tracking of the marker objects 125, 126 once they are identified, even if pattern recognition is hampered by continuously changing the point of view by, for instance, moving the camera 110 or the marker objects 125, 126. For example, after identifying a predefined pattern associated with the marker objects 125, 126 within the image data, the identifying means 130 may inform the combining means 140 about the presence of a marker object within a specified image data area and based on this information, the means 140 may then continuously track the corresponding object represented by the image data used for identifying the marker objects 125, 126, assuming that the marker objects 125, 126 will not vanish over time. In other embodiments, the process of identifying the marker objects 125, 126 may be performed substantially continuously or at least may be repeated on a regular basis so as to confirm the presence of the marker objects 125, 126 and also to verify or enhance the tracking accuracy of the combining means 140. Based on the image data of the environment and the information provided by the identifying means 130, the combining means 140 creates three-dimensional image data and superimposes corresponding three-dimensional image data received from the object generator 150, wherein the three-dimensional object data are permanently updated on the basis of the tracking operation of the means 140. For instance, the means 140 may, based on the information of the identifying means 130, calculate the position of the camera 110 with respect to the marker objects 125, 126 and use this coordinate information for determining the coordinates of a virtual camera, thereby allowing a precise "overlay" of the object data delivered by the generator 150 with the image data of the marker objects125, 126. The coordinate information also includes data on the relative orientation of the marker objects 125, 126 with respect to the camera 110, thereby enabling the combining means 140 to correctly adapt the orientation of the virtual object. Finally, the combined three-dimensional virtual image data may be presented by the output means 160 in any appropriate form. For example, the output means 160 may comprise appropriate display means so as to visualize the environment 120 including virtual objects associated with the marker objects 125, 126. When operating the system 100 it is advantageous to pre-install recognition criteria for at least one marker object 125, 126 so as to allow a substantially reliable real-time image processing. Moreover, the correlation between a respective marker object and one or more virtual objects may be established prior to the operation of the system 100 or may also be designed so as to allow an interactive definition of an assignment of virtual objects to marker objects. For example, upon user request, virtual objects initially assigned to the marker object 125 may be assigned to the marker object 126 and vice versa. Moreover, a plurality of virtual objects may be assigned to a single marker object and a respective one of the plurality of virtual objects may be selected by the user, by a software application, and the like.

Fig. 1b schematically shows the combining means 140 in more detail. In this embodiment, the combining means 140 comprises a tracking system 141, a distance measurement system 142 and a rendering system 143. As previously explained, the tracking system 141 is configured to track the relative position and orientation of the marker objects 125, 126, thereby enabling the adaptation of the object data provided by the generator 150. However, since initially in many applications the absolute dimensions encountered in the environment 120 may not be known, an accurate adaptation of the virtual object to the environment 120 may require an absolute reference distance to be identified in the real environment 120. For this purpose, the distance measurement system 142 is connected to the tracking system 141 and is adapted to determine at least one absolute measure, for instance in the form of the distance between two readily identifiable objects or portions thereof within the environment 120. The distance measurement system 142 may comprise any appropriate hardware and software resources, such as interferometric measurement tools, ultrasound measurement devices, and the like, so as to allow to determine an absolute measure of some elements in the environment 120. The distance measurement system 142 may be controlled by the tracking system 141 so as to determine an absolute measure of an element within the environment 120, which may also be recognized by the tracking system, thereby allowing to assign the absolute measurement result to the respective image data representing the specified element. In one illustrative embodiment, one or more of the marker objects 125, 126 may be used as reference elements for determining an absolute distance therebetween, since the marker objects 125, 126 are readily identified by the identifying means 130. In other embodiments, the distance measurement system 142 may be obsolete and corresponding information for correctly scaling the virtual objects may be input by the user.

The combining means 140 further comprises the rendering system 143 for generating the three-dimensional virtual image data on the basis of the image data obtained from the camera 110 and the data of the object generator 150. Moreover, the rendering system 143 is further configured to determine the illumination condition in the environment 120 and to correspondingly adapt the "virtual" illumination condition of the three-dimensional image data provided by the output means 160. For this purpose, the rendering system 143 may determine the actually prevailing illumination condition in the environment 120, for instance by appropriately scanning the environment 120 so as to establish an illumination map and identify real light sources.

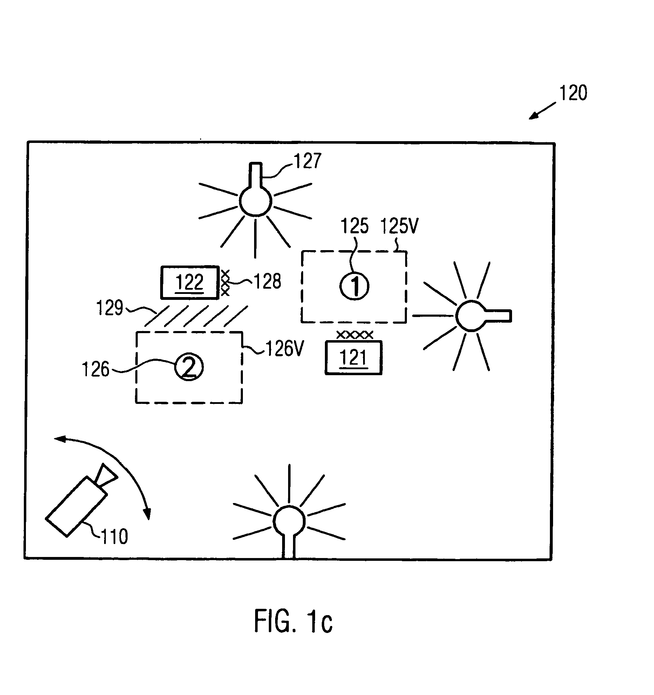

Fig. 1c schematically shows the environment 120 including the marker objects 125, 126 at predefined positions as well as real objects 121, 122, wherein a plurality of real light sources 127 may provide for a specific illumination condition within the environment 120. In this situation, the rendering system 143 may receive scan data from the camera 110, which may be moved so as to allow the determination of at least some of the characteristics of the light sources 127. For example, the camera 110, depending on its relative position, may be moved so as to cover a large portion of the solid angle corresponding to the environment 120. Based on the scan data, the rendering system 143 may then determine the position and the intensity and possibly the colour distribution of the various light sources 127.

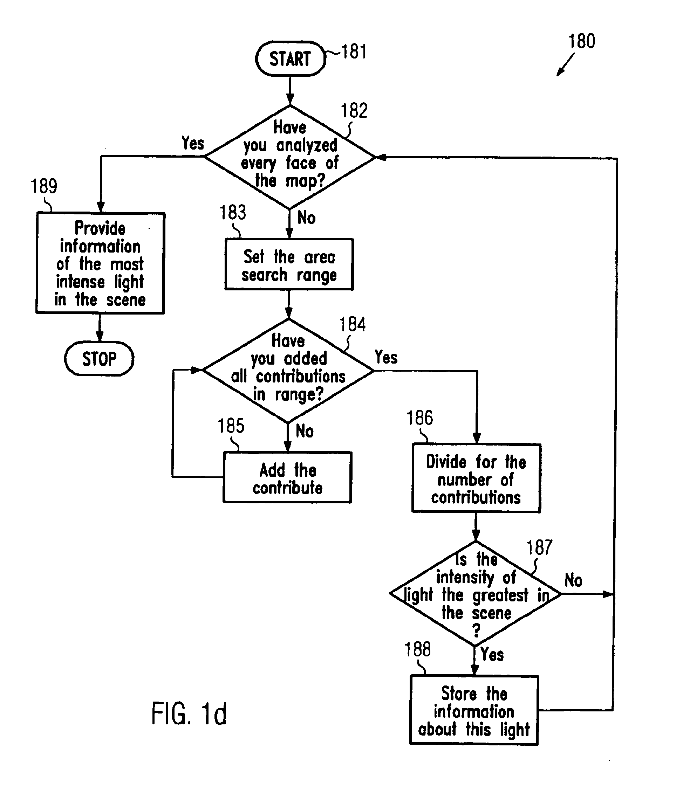

Fig. 1d depicts a schematic flow chart 180 that illustrates an exemplary process flow performed by the rendering system 143 for obtaining information on the illumination conditions of the environment 120.

In step 181 the process flow is initiated, for instance upon request by the user and/or by software, which may consider excessive camera motion as a scan activity, or which may decide to perform an assessment of the current illumination conditions any other criteria. In step 182 the image data obtained from the camera 110, organized as an illumination map including an appropriate number of sections, is assessed whether all of the sections have been analysed so far. If all the sections are analysed, the process flow may advance to step 189, in which information on the most intensive light, i.e. in Fig. 1c the light sources 127, in the scene is provided for further data processing. If not all of the sections are analysed, the process flow advances to step 183, in which the sections are set as suitable area search ranges for detecting light sources. Then in step 184 it is assessed whether all contributions for estimating the light intensity and other light-specific characteristic are added for the section under consideration. If not all contributions are taken into consideration, in step 185 all of the contributions are added up and the process flow returns to step 184. If in step 184 all contributions are taken into consideration, the process flow advances to step 186, in which the intensity of the section under consideration is estimated by, for instance, assessing the number of contributions and, if they differ in value, their respective magnitude. Thereafter, in step 187 the intensity of the section under consideration is compared with the currently highest intensity so as to identify the currently greatest intensity value of the scene. If in step 187, the section under consideration is assessed as not having the highest intensity of the scene currently processed, the process flow returns to step 182. When the intensity of the section under consideration is considered highest for the currently processed scene, the process advances to step 188, in which relevant information about this section is stored and may be provided in step 189 after all of the sections are analysed.

Again referring to Fig. 1c, based on the position data and intensity of the light sources 127 identified in the environment 120, for instance by the process flow 180, the rendering system 143 may determine corresponding virtual light sources for the virtual three-dimensional image space so as to simulate the illumination condition in the environment 120. The rendering system 143 may then calculate the effect of the virtual light sources on the environment 120, when the virtual objects corresponding to the marker objects 125, 126, indicated in dashed lines in Fig. 1c, are incorporated into the environment 120. As may be seen from Fig. 1c, the real environment 120 may substantially be free of any shadows due to the specific configuration of the light sources 127. However, after "inserting" the virtual objects 125v and 126v, virtual shadows and brightness variations may be created as the virtual light distribution may be affected by the virtual objects 125v, 126v. For example, the virtual object 125v may cause an area of reduced brightness 128 on the real object 122 caused by blocking the light of the respective light source. Similarly, the real object 122 may now create a virtual shadow 129 due to the presence of the object 126v and 125v. Thus, the rendering system 143 may correspondingly adapt the appearance of the virtual objects 126v, 125v as well as the appearance of the real objects 122, 121 in accordance with the virtual light sources created on the basis of the scan data and thus the real illumination conditions.

In some embodiments, the real illumination conditions may be altered, for instance by varying the light exposure of any light sources, so as to establish corresponding illumination maps for different illumination conditions. Thus, corresponding virtual light sources may be created that correspond to the various real illumination conditions. Moreover, the rendering system 143 may further be configured to provide additional virtual light sources and virtual illumination conditions so as to establish any illumination conditions that may not be deduced from the scan data. For example, the virtual objects may represent highly reflective objects or may themselves represent light sources, which may then provide for illumination conditions in the environment 120 that are not deducible from scan data.

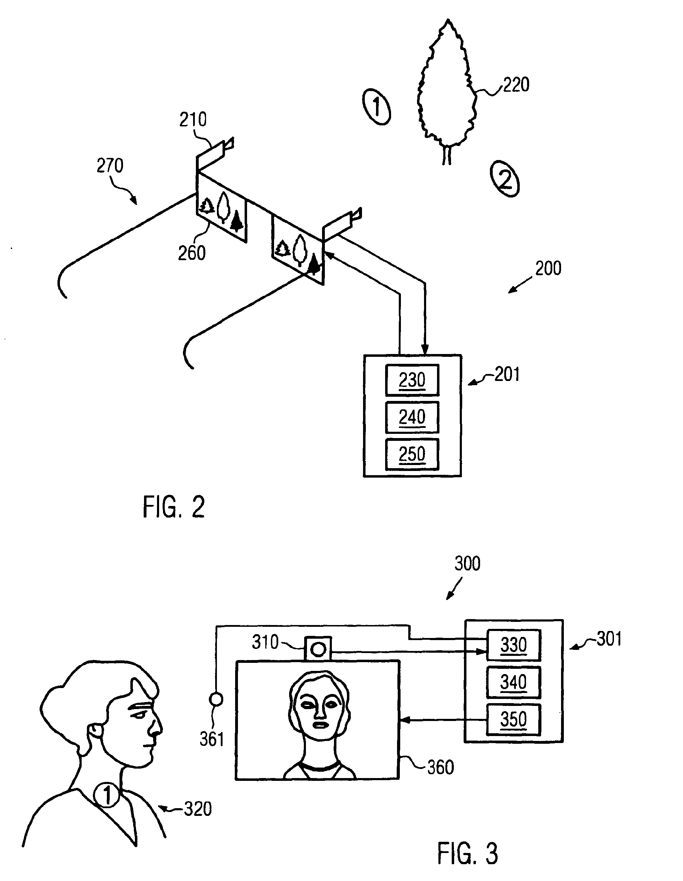

Fig. 2 schematically shows a further embodiment of the augmented reality system according to the present invention. In this embodiment, a system 200 comprises a data manipulation section 201 including, for instance, a marker object identifying means 230, a combining means 240 and the virtual object generator 250, which may have a similar configuration as is also described with reference to Figs. 1a - 1c. In particular, the combining means 240 may include a tracking system and a rendering system, such as the corresponding systems 141 and 143. Connected to the data manipulation system 201 is a head-mounted display device 270, which comprises display surfaces 260 and which also comprises an optical imaging system 210 that may be provided in the form of two appropriately positioned cameras. Moreover, a real environment 220 is provided including respective marker objects.

The operation of the system 200 is similar to that of the system 100, wherein, however, the data manipulation system 201 is configured to process image data substantially in real-time without significant time delay. In this case, a user wearing the head-mounted device 270 may obtain a highly accurate impression of the real environment 220, which is correspondingly supplemented by virtual objects associated with the respective marker objects. Advantageously, the cameras 210 may be positioned so as to substantially correspond to the user's eyes, that is, the cameras 210 may, contrary to how it is shown, be positioned within the display surfaces 260, since the display surfaces 260 are not required to transmit light from the environment 220. Consequently, a highly three-dimensional virtual image of the environment 220 may be established, thereby increasing the "reality" of the virtual image obtained from the environment 220 and the corresponding virtual objects. Moreover, the head-mounted device 270 may comprise a distance measurement system, thereby allowing a precise scaling of any virtual objects with respect to the real objects in the environment 220.

Fig. 3 schematically shows a virtual mirror system 300 including a data manipulation system 301 which may comprise a marker identification means 330, an image data combining means 340a and a virtual object generator 350. The corresponding components of the data manipulation system 301 may be configured similarly to those previously described with reference to the components of the system 100 and 200.

Moreover, the system 300 comprises an output means 360 comprising a display surface that is positioned in front of a part of interest of a real environment 320. Moreover, the system 300 comprises an optical imaging system 310 that is also positioned in front of the interesting part of the environment 320 so that a virtual "mirror" image may be displayed on the display surface 360 upon operation of the system 300. In principle, the operation of the system 300 is similar to the operation of the system 100 and 200. That is, after gathering image data by the optical imaging system 310, a marker object is identified, for instance attached to a user positioned so as to face the optical imaging system 310 and the display surface 360, and the marker object is identified and tracked, as is previously described. Moreover, based on a predefined or user-initiated association of one or more marker objects with respective virtual objects, the generator 350 provides corresponding object data to the combining means 340, which may produce corresponding virtual image data including the virtual object. The corresponding virtual image data are then provided to the output means 360 so as to give the user the impression of a mirror image. Moreover, further input or output means 361 may be provided, for instance in the form of a loudspeaker, a microphone, and the like, so as to enhance the output capabilities of the system 300 and/or provide enhanced input capabilities. For instance, a speech recognition system may be implemented within the means 361 so as to allow the user to control the data manipulation system 301, for instance for the selection of specific virtual objects that should replace the marker object in the virtual image. Moreover, the system 300, ie. the marker identification means 330, may be configured so as to recognize a plurality of marker objects substantially simultaneously so as to allow the presence of a plurality of virtual objects in the virtual image. For example, jewellery, clothes, and the like, may be used as virtual objects sequentially or simultaneously. Moreover, the combining means 340 may comprise a rendering system, similar to the system 143, enabling an appropriate adaptation of illumination conditions so as to provide the virtual mirror image under various real or virtual light conditions, which may be highly advantageous in applications, such as assessing jewellery, clothes, cosmetic or surgical operations, and the like.

## Claims

1. An augmented reality system (100) comprising:
means (110) for gathering image data of a real environment,
means (160) for generating virtual image data from said image data,
means (130) for identifying a predefined marker object (125, 126) of said real environment based on said image data,
means (140) for superimposing a set of object image data with said virtual image data at a virtual image position corresponding to said predefined marker object (125, 126), and
a rendering system (143)
**characterized in that**:
said rendering system (143) is configured to scan at least a portion of said real environment to generate scan data, to determine the illumination conditions of said real environment on the basis of said scan data and to adapt said object image data to said illumination conditions, wherein said rendering system (143) further generates virtual shadow on the basis of the position of said marker object (125, 126), said set of object image data and said illumination conditions.

2. The augmented reality system of claim 1, further comprising means for correlating a plurality of sets of object image data with said predefined marker object.

3. The augmented reality system of claim 2, further comprising means for selecting one of the plurality of sets of object image data to be superimposed with said virtual image data.

4. The augmented reality system of claim 3, wherein said means for selecting one of the plurality of sets of object image data comprises a speech recognition system.

5. The augmented reality system of claim 3 or 4, wherein said means for selecting one of the plurality of sets of object image data comprises manual input means.

6. The augmented reality system of any of claims 1 to 5, further comprising output means (160) for displaying at least said virtual image data.

7. The augmented reality system of claim 6, wherein said output means (160) comprises a head mounted display means (270).

8. The augmented reality system of claim 7, wherein said head mounted display means (270) comprises said means (210) for gathering image data of a real environment.

9. The augmented reality system of any of claims 1 to 8, wherein said means for identifying a predefined marker object comprises a tracking system (141) configured to determine relative position data and orientation data with respect to said means (110) for gathering image data of a real environment.

10. The augmented reality system of claim 9, wherein said tracking system (141) is configured to provide said relative position data and orientation data in real time.

11. The augmented reality system of any of claims 1 to 10, further comprising an object data generator (150) for obtaining said set of object image data.

12. The augmented reality system of any of claims 1 to 11, further comprising a virtual illumination system configured to determine at least a position and/or an intensity and/or a colour distribution of at least one real light source from said image data.

13. The augmented reality system of claim 12, wherein said virtual illumination system is further configured to generate a virtual light source corresponding to said at least one real light source.

14. The augmented reality system of claim 13, wherein said virtual illumination system is configured to vary at least one of a position, an intensity and a colour distribution of said virtual light source.

15. The augmented reality system of any of claims 13 to 14, wherein said virtual illumination system is further configured to generate a second virtual light source in addition to said virtual light source corresponding to said at least one real light source.

16. A virtual mirror system (300) comprising:
an augmented reality system according to any of claims 1 to 15, and
a display means (360) having a display surface positioned in front of a part of interest of said real environment,
wherein said means for gathering image data of said real environment comprises an optical imaging system (310) positioned in front of said part of interest.

17. The virtual mirror system of claim 16, wherein said means for identifying a predefined marker object is configured to identify a plurality of predefined marker objects provided in said part of interest.

18. A method of generating an augmented reality, comprising:
gathering image data from a real environment,
identifying a predefined marker object provided in said real environment on the basis of said image data,
generating virtual image data of said real environment,
superimposing a set of object image data with said virtual image data at a virtual image position corresponding to said predefined marker object,
scanning at least a portion of said real environment to generate scan data and determining an illumination condition of said real environment on the basis of said scan data, and
generating virtual shadow on the basis of the position of said marker object, said set of object image data and said illumination condition.

19. The method of claim 18, further comprising tracking said predefined marker object when modified image data, indicating a relative displacement of the marker object, are gathered from said real environment.

20. The method of claim 19, wherein tracking said predefined marker object at least comprises determining a relative position and orientation of said predefined marker object with respect to a virtual reference point.

21. The method of any of claims 18 to 20, further comprising generating said object image data on the basis of image data from a second real environment that is different from said real environment.

22. The method of any of claims 18 to 20, further comprising generating said object image data on the basis of said image data from said real environment.

23. The method of any of claims 18 to 22, further comprising generating said object image data on the basis of a virtual reality.

24. The method of any of claims 18 or 23, wherein determining an illumination condition comprises identifying at least one light source illuminating said real environment and determining a position and/or an intensity and/or a colour of said at least one light source.

25. The method of claim 24, further comprising generating a virtual illumination condition on the basis of said at least one identified light source.

26. The method of claim 25, wherein generating said virtual illumination condition comprises generating virtual shadow caused by said object image data and/or caused by said virtual image data corresponding to said real environment.

27. The method of claim 25 or 26, wherein generating said virtual illumination condition comprises virtually varying at least one of the position, the intensity and the colour of said at least one light source.

28. The method of any of claims 18 to 27, further comprising generating at least one virtual light source, said at least one virtual light source having no corresponding light source in said real environment.

29. The method of any of claims 18 to 28, further comprising displaying said virtual image data with at least said marker object image data replaced by said object image data.

30. The method of any of claims 18 to 29, further comprising associating one or more sets of object data with one or more marker objects.

31. The method of claim 30, further comprising selecting a specific set of object data for replacing said virtual image data corresponding to specific marker object that is associated with a plurality of sets of object data.

32. The method of claim 31, wherein selecting said specific set of object data comprises recognizing speech data and determining whether said recognised speech data correspond to one of the plurality of sets of object data.

33. A method of forming a virtual mirror image comprising the method of claim 18 and further comprising:
positioning a display means and an image capturing means in front of a part of interest of a real environment.

34. The method of claim 33, wherein said part of interest includes at least a portion of a user having attached said predefined marker object.

35. The method of claim 34, wherein said object image data represent clothes.

36. The method of any of claims 33 to 35, wherein a second predefined marker object is provided that is associated with second object image data.

## Patentansprüche

1. Erhöht realitätstreues System (100), umfassend:
Mittel (110) zum Sammeln von Bilddaten einer Reellumgebung,
Mittel (160) zum Generieren von Virtuellbilddaten aus den Bilddaten,
Mittel (130) zum Identifizieren eines vordefinierten Markierungsobjektes (125, 126) der Reellumgebung auf Grundlage der Bilddaten,
Mittel (140) zum Überlagern eines Satzes von Objektbilddaten mit den Virtuellbilddaten an einer Virtuellbildposition entsprechend dem vordefinierten Markierungsobjekt (125, 126), und
ein Erstellungssystem (143),
**dadurch gekennzeichnet, dass**
das Erstellungssystem (143) dafür ausgelegt ist, wenigstens einen Abschnitt der Reellumgebung abzutasten, Abtastdaten zu generieren, die Beleuchtungsbedingungen der Reellumgebung auf Grundlage der Abtastdaten zu bestimmen und die Objektbilddaten an die Beleuchtungsbedingungen anzupassen, wobei das Erstellungssystem (143) des Weiteren Virtuellschatten auf Grundlage der Position des Markierungsobjektes (125, 126), des Satzes von Objektbilddaten und der Beleuchtungsbedingungen generiert.

2. Erhöht realitätstreues System nach Anspruch 1, des Weiteren umfassend Mittel zum Korrelieren einer Mehrzahl von Sätzen von Objektbilddaten mit dem vordefinierten Markierungsobjekt.

3. Erhöht realitätstreues System nach Anspruch 2, des Weiteren umfassend Mittel zum Auswählen von einem aus der Mehrzahl von Sätzen von Objektbilddaten zur Überlagerung mit den Virtuellbilddaten.

4. Erhöht realitätstreues System nach Anspruch 3, wobei das Mittel zum Auswählen von einem aus der Mehrzahl von Sätzen von Objektbilddaten ein Spracherkennungssystem umfasst.

5. Erhöht realitätstreues System nach Anspruch 3 oder 4, wobei das Mittel zum Auswählen von einem aus der Mehrzahl von Sätzen von Objektbilddaten Manuelleingabemittel umfasst.

6. Erhöht realitätstreues System nach einem der Ansprüche 1 bis 5, des Weiteren umfassend Ausgabemittel (160) zum Anzeigen wenigstens der Virtuellbilddaten.

7. Erhöht realitätstreues System nach Anspruch 6, wobei das Ausgabemittel (160) ein kopfmontiertes Anzeigemittel (270) umfasst.

8. Erhöht realitätstreues System nach Anspruch 7, wobei das kopfmontierte Anzeigemittel (270) das Mittel (210) zum Sammeln von Bilddaten einer Reellumgebung umfasst.

9. Erhöht realitätstreues System nach einem der Ansprüche 1 bis 8, wobei das Mittel zum Identifizieren eines vordefinierten Markierungsobjektes ein Verfolgungssystem (141) umfasst, das dafür ausgelegt ist, relative Positionsdaten und Orientierungsdaten in Bezug auf das Mittel (110) zum Sammeln von Bilddaten einer Reellumgebung zu bestimmen.

10. Erhöht realitätstreues System nach Anspruch 9, wobei das Verfolgungssystem (141) dafür ausgelegt ist, die relativen Positionsdaten und Orientierungsdaten in Echtzeit bereitzustellen.

11. Erhöht realitätstreues System nach einem der Ansprüche 1 bis 10, des Weiteren umfassend einen Objektdatengenerator (150) zum Ermitteln des Satzes von Objektbilddaten.

12. Erhöht realitätstreues System nach einem der Ansprüche 1 bis 11, des Weiteren umfassend ein Virtuellbeleuchtungssystem, das dafür ausgelegt ist, wenigstens eine Position und/oder eine Intensität und/oder eine Farbverteilung wenigstens einer Reelllichtquelle aus den Bilddaten zu bestimmen.

13. Erhöht realitätstreues System nach Anspruch 12, wobei das Virtuellbeleuchtungssystem des Weiteren dafür ausgelegt ist, eine Virtuelllichtquelle entsprechend der wenigstens einen Reelllichtquelle zu generieren.

14. Erhöht realitätstreues System nach Anspruch 13, wobei das Virtuellbeleuchtungssystem dafür ausgelegt ist, wenigstens eines von einer Position, einer Intensität und einer Farbverteilung der Virtuelllichtquelle zu variieren.

15. Erhöht realitätstreues System nach einem der Ansprüche 13 bis 14, wobei das Virtuellbeleuchtungssystem des Weiteren dafür ausgelegt ist, eine zweite Virtuelllichtquelle zusätzlich zu der Virtuelllichtquelle entsprechend der wenigstens einen Reelllichtquelle zu generieren.

16. Virtuellspiegelsystem (300), umfassend:
ein erhöht realitätstreues System nach einem der Ansprüche 1 bis 15, und
ein Anzeigemittel (360) mit einer Anzeigeoberfläche, die vor einem von Interesse seienden Teil der Reellumgebung positioniert ist,
wobei das Mittel zum Sammeln von Bilddaten der Reellumgebung ein optisches Abbildungssystem (310) mit einer Positionierung vor dem von Interesse seienden Teil umfasst.

17. Virtuellspiegelsystem nach Anspruch 16, wobei das Mittel zum Identifizieren eines vordefinierten Markierungsobjektes dafür ausgelegt ist, eine Mehrzahl von vordefinierten Markierungsobjekten, die in dem von Interesse seienden Teil vorhanden sind, zu identifizieren.

18. Verfahren zum Generieren einer erhöhten Realitätstreue, umfassend:
Sammeln von Bilddaten aus einer Reellumgebung,
Identifizieren eines in der Reellumgebung bereitgestellten vordefinierten Markierungsobjektes auf Grundlage der Bilddaten,
Generieren von vrtuellbilddaten der Reellumgebung,
Überlagern eines Satzes von Objektbilddaten mit den Virtuellbilddaten an einer Virtuellbildposition entsprechend dem vordefinierten Markierungsobjekt,
Abtasten von wenigstens einem Abschnitt der Reellumgebung zum Generieren von Abtastdaten und Bestimmen einer Beleuchtungsbedingung der Reellumgebung auf Grundlage der Abtastdaten und
Generieren von Virtuellschatten auf Grundlage der Position des Markierungsobjektes, des Satzes von Objektbilddaten und der Beleuchtungsbedingung.

19. Verfahren nach Anspruch 18, des Weiteren umfassend ein Verfolgen des vordefinierten Markierungsobjektes bei aus der Reellumgebung erfolgender Sammlung von modifizierten Bilddaten zur Angabe einer relativen Versetzung des Markierungsobjektes.

20. Verfahren nach Anspruch 19, wobei das Verfolgen des vordefinierten Markierungsobjektes wenigstens ein Bestimmen einer relativen Position und Orientierung des vordefinierten Markierungsobjektes in Bezug auf einen Vrtuellbezugspunkt umfasst.

21. Verfahren nach einem der Ansprüche 18 bis 20, des Weiteren umfassend ein Generieren der Objektbilddaten auf Grundlage der Bilddaten aus einer zweiten Reellumgebung, die von der Reellumgebung verschieden ist.

22. Verfahren nach einem der Ansprüche 18 bis 20, des Weiteren umfassend ein Generieren der Objektbilddaten auf Grundlage der Bilddaten aus der Reellumgebung.

23. Verfahren nach einem der Ansprüche 18 bis 22, des Weiteren umfassend ein Generieren der Objektbilddaten auf Grundlage einer virtuellen Realität.

24. Verfahren nach einem der Ansprüche 18 bis 23, wobei das Bestimmen einer Beleuchtungsbedingung ein Identifizieren von wenigstens einer die Reellumgebung beleuchtenden Lichtquelle und ein Bestimmen einer Position und/oder einer Intensität und/oder einer Farbe der wenigstens einen Lichtquelle umfasst.

25. Verfahren nach Anspruch 24, des Weiteren umfassend ein Generieren einer Virtuellbeleuchtungsbedingung auf Grundlage der wenigstens einen identifizierten Lichtquelle.

26. Verfahren nach Anspruch 25, wobei das Generieren der Virtuellbeleuchtungsbedingung ein Generieren von Virtuellschatten aus der Verursachung durch die Objektbilddaten und/oder aus der Verursachung durch die Virtuellbilddaten entsprechend der Reellumgebung umfasst.

27. Verfahren nach Anspruch 25 oder 26, wobei das Generieren der Virtuellbeleuchtungsbedingung ein Virtuellvarüeren von wenigstens einem von der Position, der Intensität und der Farbe der wenigstens einen Lichtquelle umfasst.

28. Verfahren nach einem der Ansprüche 18 bis 27, des Weiteren umfassend ein Generieren von wenigstens einer Virtuelllichtquelle, wobei die wenigstens eine Virtuelllichtquelle über keine entsprechende Lichtquelle in der Reellumgebung verfügt.

29. Verfahren nach einem der Ansprüche 18 bis 28, des Weiteren umfassend ein Anzeigen der Virtuellbilddaten mit wenigstens den Markierungsobjektbilddaten gemäß Ersetzung durch die Objektbilddaten.

30. Verfahren nach einem der Ansprüche 18 bis 29, des Weiteren umfassend ein Verknüpfen von einem oder mehreren Sätzen von Objektdaten mit einem oder mehreren Markierungsobjekten.

31. Verfahren nach Anspruch 30, des Weiteren umfassend ein Auswählen eines spezifischen Satzes von Objektdaten zum Ersetzen der Virtuellbilddaten entsprechend einem spezifischen Markierungsobjekt gemäß Verknüpfung mit einer Mehrzahl von Sätzen von Objektdaten.

32. Verfahren nach Anspruch 31, wobei das Auswählen des spezifischen Satzes von Objektdaten ein Erkennen von Sprachdaten und ein Bestimmen, ob die erkannten Sprachdaten einem aus der Mehrzahl von Sätzen von Objektdaten entsprechen, umfasst.

33. Verfahren zum Bilden eines Virtuellspiegelbildes, umfassend das Verfahren nach Anspruch 18 und des Weiteren umfassend:
Positionieren eines Anzeigemittels und eines Bilderfassungsmittels vor einem von Interesse seienden Teil der Reellumgebung.

34. Verfahren nach Anspruch 33, wobei der von Interesse seiende Teil wenigstens einen Abschnitt eines Anwenders, der das vordefinierte Markierungsobjekt angebracht hat, beinhaltet.

35. Verfahren nach Anspruch 34, wobei die Objektbilddaten Kleidungsstücke darstellen.

36. Verfahren nach einem der Ansprüche 33 bis 35, wobei ein zweites vordefiniertes Markierungsobjekt vorgesehen ist, das mit zweiten Objektbilddaten verknüpft ist.

## Revendications

1. Système de réalité augmentée (100) comprenant :
un moyen (110) pour recueillir des données d'image d'un environnement réel,
un moyen (160) pour produire des données d'image virtuelle à partir desdites données d'image,
un moyen (130) pour identifier un objet marqueur prédéterminé (125, 126) dudit environnement réel en se basant sur lesdites données d'image,
un moyen (140) pour superposer un ensemble de données d'image d'objet sur lesdites données d'image virtuelle au niveau d'une position d'image virtuelle correspondant audit objet marqueur prédéterminé (125, 126) , et
un système de rendu (143)
**caractérisé en ce que**
ledit système de rendu (143) est configuré pour balayer au moins une partie dudit environnement réel pour produire des données de balayage, pour déterminer les conditions d'éclairage dudit environnement réel sur la base desdites données de balayage et pour adapter lesdites données d'image d'objet auxdites conditions d'éclairage, dans lequel ledit système de rendu (143) produit en outre une ombre virtuelle sur la base de la position dudit objet marqueur (125, 126), dudit ensemble de données d'image d'objet et desdites conditions d'éclairage.

2. Système de réalité augmentée selon la revendication 1, comprenant en outre un moyen pour corréler plusieurs ensembles de données d'image d'objet audit objet marqueur prédéterminé.

3. Système de réalité augmentée selon la revendication 2, comprenant en outre un moyen pour sélectionner un ensemble parmi les plusieurs ensembles de données d'image d'objet à superposer sur lesdites données d'image virtuelle.

4. Système de réalité augmentée selon la revendication 3, dans lequel ledit moyen pour sélectionner un ensemble parmi les plusieurs ensembles de données d'image d'objet comprend un système de reconnaissance de la parole.

5. Système de réalité augmentée selon la revendication 3 ou 4, dans lequel ledit moyen pour sélectionner un ensemble parmi les plusieurs ensembles de données d'image d'objet comprend un moyen d'entrée manuel.

6. Système de réalité augmentée selon l'une quelconque des revendications 1 à 5, comprenant en outre un moyen de sortie (160) pour afficher au moins lesdites données d'image virtuelle.

7. Système de réalité augmentée selon la revendication 6, dans lequel ledit moyen de sortie (160) comprend un moyen d'affichage tête haute (270).

8. Système de réalité augmentée selon la revendication 7, dans lequel ledit moyen d'affichage tête haute (270) comprend ledit moyen (210) pour recueillir des données d'image d'un environnement réel.

9. Système de réalité augmentée selon l'une quelconque des revendications 1 à 8, dans lequel ledit moyen pour identifier un objet marqueur prédéterminé comprend un système de suivi (141) configuré pour déterminer des données de position relative et des données d'orientation en ce qui concerne ledit moyen (110) pour recueillir des données d'image d'un environnement réel.

10. Système de réalité augmentée selon la revendication 9, dans lequel ledit système de suivi (141) est configuré pour fournir en temps réel lesdites données de position relative et lesdites données d'orientation.

11. Système de réalité augmentée selon l'une quelconque des revendications 1 à 10, comprenant en outre un générateur de données d'objet (150) pour obtenir ledit ensemble de données d'image d'objet.

12. Système de réalité augmentée selon l'une quelconque des revendications 1 à 11, comprenant en outre un système d'éclairage virtuel configuré pour déterminer au moins une position et/ou une intensité et/ou une distribution de couleur d'au moins une source de lumière réelle à partir desdites données d'image.

13. Système de réalité augmentée selon la revendication 12, dans lequel ledit système d'éclairage virtuel est en outre configuré pour produire une source de lumière virtuelle correspondant à ladite source de lumière réelle.

14. Système de réalité augmentée selon la revendication 13, dans lequel ledit système d'éclairage virtuel est configuré pour modifier au moins l'une d'une position, d'une intensité et d'une distribution de couleur de ladite source de lumière virtuelle.

15. Système de réalité augmentée selon l'une quelconque des revendications 13 à 14, dans lequel ledit système d'éclairage virtuel est en outre configuré pour produire une seconde source de lumière virtuelle en plus de ladite source de lumière virtuelle correspondant à ladite source de lumière réelle.

16. Système de miroir virtuel (300) comprenant :
un système de réalité augmentée selon l'une quelconque des revendications 1 à 15, et
un moyen d'affichage (360) ayant une surface d'affichage positionnée devant une partie d'intérêt dudit environnement réel,
dans lequel ledit moyen pour recueillir des données d'image dudit environnement réel comprend un système d'imagerie optique (310) positionné devant ladite partie d'intérêt.

17. Système de miroir virtuel selon la revendication 16, dans lequel ledit moyen pour identifier un objet marqueur prédéterminé est configuré pour identifier plusieurs objets marqueurs prédéterminés fournis dans ladite partie d'intérêt.

18. Procédé de production d'une réalité augmentée, comprenant les étapes consistant à :
recueillir des données d'image provenant d'un environnement réel,
identifier un objet marqueur prédéterminé fourni dans ledit environnement réel sur la base desdites données d'image,
produire des données d'image virtuelle dudit environnement réel,
superposer un ensemble de données d'image d'objet sur lesdites données d'image virtuelle au niveau d'une position d'image virtuelle correspondant audit objet marqueur prédéterminé,
balayer au moins une partie dudit environnement réel pour produire des données de balayage et pour déterminer une condition d'éclairage dudit environnement réel sur la base desdites données de balayage, et
produire une ombre virtuelle sur la base de la position dudit objet marqueur, dudit ensemble de données d'image d'objet et de ladite condition d'éclairage.

19. Procédé selon la revendication 18, comprenant en outre le suivi dudit objet marqueur prédéterminé lorsque des données d'image modifiée, indiquant un déplacement relatif de l'objet marqueur, sont recueillies à partir dudit environnement réel.

20. Procédé selon la revendication 19, dans lequel le suivi dudit objet marqueur prédéterminé comprend au moins la détermination d'une position relative et d'une orientation dudit objet marqueur prédéterminé par rapport à un point de référence virtuel.

21. Procédé selon l'une quelconque des revendications 18 à 20, comprenant en outre la production desdites données d'image d'objet sur la base de données d'image en provenance d'un second environnement réel qui diffère dudit environnement réel.

22. Procédé selon l'une quelconque des revendications 18 à 20, comprenant en outre la production desdites données d'image d'objet sur la base desdites données d'image provenant dudit environnement réel.

23. Procédé selon l'une quelconque des revendications 18 à 22, comprenant en outre la production desdites données d'image d'objet sur la base d'une réalité virtuelle.

24. Procédé selon l'une quelconque des revendications 18 ou 23, dans lequel la détermination d'une condition d'éclairage comprend l'identification d'au moins une source de lumière éclairant ledit environnement réel et la détermination d'une position et/ou d'une intensité et/ou d'une couleur de ladite au moins une source de lumière.

25. Procédé selon la revendication 24, comprenant en outre la production d'une condition d'éclairage virtuel sur la base de ladite source de lumière identifiée.

26. Procédé selon la revendication 25, dans lequel la production de ladite condition d'éclairage virtuel comprend la production d'une ombre virtuelle provoquée par lesdites données d'image d'objet et/ou provoquée par lesdites données d'image virtuelle correspondant audit environnement réel.

27. Procédé selon la revendication 25 ou 26, dans lequel la production de ladite condition d'éclairage virtuel comprend pratiquement le changement d'au moins une de la position, de l'intensité et de la couleur de ladite au moins une source de lumière.

28. Procédé selon l'une quelconque des revendications 18 à 27, comprenant en outre la production d'au moins une source de lumière virtuelle, ladite source de lumière virtuelle n'ayant aucune source de lumière correspondante dans ledit environnement réel.

29. Procédé selon l'une quelconque des revendications 18 à 28, comprenant en outre l'affichage desdites données d'image virtuelle, au moins lesdites données d'image d'objet marqueur étant remplacées par lesdites données d'image d'objet.

30. Procédé selon l'une quelconque des revendications 18 à 29, comprenant en outre l'association d'un ou plusieurs ensembles de données d'objet à un ou plusieurs objets marqueurs.

31. Procédé selon la revendication 30, comprenant en outre la sélection d'un ensemble spécifique de données d'objet pour remplacer lesdites données d'image virtuelle correspondant à un objet marqueur spécifique qui est associé à plusieurs ensembles de données d'objet.

32. Procédé selon la revendication 31, dans lequel la sélection dudit ensemble spécifique de données d'objet comprend la reconnaissance de données vocales et la détermination de savoir si lesdites données vocales reconnues correspondent à un ensemble parmi les plusieurs ensembles de données d'objet.

33. Procédé de formation d'une image miroir virtuelle comprenant le procédé selon la revendication 18 et comprenant en outre l'étape consistant à :
positionner un moyen d'affichage et un moyen de capture d'image devant une partie d'intérêt d'un environnement réel.

34. Procédé selon la revendication 33, dans lequel ladite partie d'intérêt comprend au moins une partie d'un utilisateur ayant attaché ledit objet marqueur prédéterminé.

35. Procédé selon la revendication 34, dans lequel lesdites données d'image d'objet représentent des vêtements.

36. Procédé selon l'une quelconque des revendications 33 à 35, dans lequel un second objet marqueur prédéterminé est prévu, lequel est associé à des secondes données d'image d'objet.
